# EUROPÄISCHE PATENTSCHRIFT

(11) **EP 2 709 820 B1**
(45) Veröffentlichungstag und Bekanntmachung des Hinweises auf die Patenterteilung: **01.01.2020**
(21) Anmeldenummer: 12717052.0
(22) Anmeldetag: 17.04.2012
(51) Int. Cl.: B29C 49/46, B65B 3/02, B29C 49/06, B29C 49/12, B29C 49/32, B29C 49/36

(54) **VERFAHREN SOWIE VORRICHTUNG ZUM HERSTELLEN VON GEFÜLLTEN BEHÄLTERN AUS VORFORMLINGEN**
PROCESS AND APPARATUS FOR MANUFACTURING FILLED CONTAINERS FROM PREFORMS
PROCÉDÉ ET APPAREIL POUR LA FABRICATION DE RECIPIENTS REMPLIS À PARTIR DE PRÉFORMES

(30) Priorität: 19.05.2011 DE 102011102056
(43) Veröffentlichungstag der Anmeldung: 26.03.2014
(73) Patentinhaber: KHS GmbH, 44143 Dortmund (DE); KHS Corpoplast GmbH, 22145 Hamburg (DE)
(72) Erfinder: DRENGUIS, Alfred, 21039 Börnsen (DE); KLATT, Dieter, 22147 Hamburg (DE)
(74) Vertreter: Hausfeld, Norbert
(86) Internationale Anmeldenummer: PCT/EP2012/001645
(87) Internationale Veröffentlichungsnummer: WO 2012/156014

(56) Entgegenhaltungen:
- EP-A1- 1 529 620
- WO-A2-2004/113052
- WO-A2-2007/120807
- DE-A1- 1 800 525
- DE-A1- 1 916 636
- DE-A1- 2 138 899
- FR-A- 1 430 316
- GB-A- 954 473
- GB-A- 1 474 044
- JP-A- 2000 043 129
- US-A1- 2011 059 197
- US-B1- 6 214 282

## Beschreibung

Die Erfindung betrifft ein Verfahren gemäß Oberbegriff Patentanspruch 1 sowie eine Vorrichtung gemäß Oberbegriff Patentanspruch 6.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE-OS 43 40 291). Typischerweise weist eine Blasmaschine eine Heizeinrichtung zum Temperieren oder Vorerhitzen (thermisches Konditionieren) der Vorformlinge sowie eine Blaseinrichtung mit wenigstens einer Blasstation auf, in deren Bereich der jeweils zuvor temperierte Vorformling biaxial oder multiaxial zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau der Blasstation ist in der DE-OS 42 12 583 beschrieben. Möglichkeiten der Temperierung der Vorformlinge sind in der DE-OS 23 52 926 erläutert. Die US 2011/0059197 A1 beschreibt, wie beispielsweise wie Elemente einer Blasform bewegt werden können.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockte Blas-Füll-Einrichtung zusammen zu fassen, wobei weiterhin das Blasformen und das Füllen an gesonderten Maschinenkomponenten und zeitlich nacheinander erfolgen.

Aus der GB 1 474 044 A ist ein Verfahren bekannt, bei dem ein Behälter zunächst innerhalb einer Form durch Zufuhr eines Druckgases geformt und anschließend eine Flüssigkeit unter Druck in den Behälter eingebracht wird.

Es wurde weiterhin bereits vorgeschlagen, Behälter, insbesondere auch in Form von Flaschen aus thermisch konditionierten bzw. vorerhitzten Vorformlingen herzustellen und dabei gleichzeitig mit einem flüssigen Füllgut zu füllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter verformt wird. Ein solches Verfahren ist z.B. aus der EP 1 529 620 A1 entsprechend die Oberbegriffe der unabhängigen Ansprüche bekannt. Eine gewisse Problematik besteht bei derartigen Verfahren darin, dass eine Verschmutzung der jeweiligen Form- und Füllstelle bzw. der diese Station bildenden Form, die ähnlich einer Blasform einer Blasformmaschine zum Herstellen von Behältern aus thermisch konditionierten Vorformlingen durch Blasen mit einem Druckgas ausgeführt ist, vermieden werden muss. Speziell im Falle einer Voll- oder Teilkarbonisierung des Füllgutes besteht im besonderem Maße die Gefahr einer Verschmutzung der jeweiligen Form- und Füllstelle durch Füllgutverluste, insbesondere bei der Absenkung des Innendrucks des Behälters, d.h. bei der Entlastung des Behälters von dem recht hohen Form- und Fülldruck auf den Umgebungsdruck. Derartige Füllgutverluste sind insbesondere durch eine massive Schaumbildung beim Entlasten bedingt, sodass das gleichzeitige Formen und Füllen von Behältern unter Verwendung von Vorformlingen und unter Verwendung des Füllgutes als Druckmedium (hydraulische Ausformtechnik), insbesondere für C02-haltige Produkte bisher nicht zum Einsatz kommen konnte.

Weiterhin verbleibt am Ende des jeweiligen Form- und Füllprozesses zwangsläufig Füllgut an bzw. in den Form- und Füllelementen. Dieses Füllgut tropft zumindest teilweise ab und/oder verteilt sich aufgrund der Luftbewegung im Innenraum der Formen der Form- und Füllstellen und verschmutzt dabei insbesondere auch kritische Oberflächen, d.h. solche Oberflächen, die während des Formens und Füllens mit dem Füllgut und/oder mit füllgutnahen und/oder das Füllgut berührenden Flächen der Behälter in Berührung kommen, sodass es durch Verkeimung der mit dem Füllgut verschmutzten Flächen zu einer mikrobiologische Gefährdung des Füllgutes, aber auch von Personen, insbesondere des Bedienungspersonals kommt.

Aufgabe der Erfindung ist es, ein Verfahren aufzuzeigen, welches eine Verschmutzung der Form der jeweiligen Form- und Füllstelle zumindest während des normalen Form- und Füllbetriebes zuverlässig vermeidet. Zur Lösung dieser Aufgabe ist ein Verfahren entsprechend dem Patentanspruch 1 ausgebildet. Eine Vorrichtung zum Füllen von Behältern ist Gegenstand des Patentanspruchs 6.

Bei dem erfindungsgemäßen Verfahren wird vor dem Ende eines jedes Form- und Füllprozesses, d.h. vor dem Abnehmen des jeweiligen gefüllten Behälters und gegebenenfalls vor dem endgültigen Entlasten des gefüllten Behälters der Betriebszustand der Form- und Füllstelle von einem Form- und Füllzustand, in dem das Formen und Füllen der Behälter erfolgt, in einen Schutzzustand geändert, in welchem sich das Form- und Füllelement außerhalb der Form befindet.

Erst nach der Übergabe eines weiteren Vorformlings an die Form- und Füllposition für einen weiteren Form- und Füllprozess wird die jeweilige Form- und Füllstelle in ihren Form- und Füllzustand zurück versetzt. Hierdurch ist erreicht, dass sich während des normalen Form- und Füllbetriebes zu keinem Zeitpunkt ein von einem Vorformling oder Behälter nicht besetztes Form- und Füllelement im Innenraum einer Form befindet bzw. in diesen Innenraum hineinreicht und somit u.a. auch kein Füllgutrest, welcher nach dem Füllen und Formen eines Behälters am Form- und Füllelement verblieben ist oder beim endgültigen Entlasten der Behälter frei gesetzt wird, in die Formen bzw. in deren Innenräume gelangen kann.

Bei einer bevorzugten Ausführungsform sind zusätzlich Mittel zum Reinigen und/oder Sterilisieren bzw. Desinfizieren der Form- und Füllstellen und deren Formen vorgesehen, wobei dieses Reinigen und Sterilisieren bzw. Desinfizieren entweder periodisch in einem eigenständigen Reinigungs- und Sterilisations- oder Desinfektionsbetrieb erfolgt, oder aber bei den jeweils im Schutzzustand befindlicher Form -und Füllstellen, z.B. auch während des laufenden Form- und Füllprozesses durchgeführt wird.

Unter "füllgutnahe Bereiche" sind im Sinne der Erfindung solche Bereiche oder Flächen der Form- und Füllstelle zu verstehen, die direkt mit dem Füllgut in Berührung kommen, d.h. insbesondere die Füllgut führenden Bereiche, aber auch Bereiche oder Flächen, die mit Flächen, insbesondere auch mit den Öffnungsrand und der Innenfläche der Vorformlinge und der sich formenden Behälter in Berührung kommen und/oder während des Form- und Füllprozesses in die Vorformling bzw. in die sich bildenden Behälter hineinreichen. "Füllgutnahe Bereiche" sind im Sinne der Erfindung aber insbesondere auch solche Bereiche der Vorformlinge oder Behälter, die während des Formens und Füllen und/oder danach mit dem Füllgut in Verbindung stehen, so u.a. auch die Behältermündung und an diese unmittelbar angrenzende Behälterbereiche.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an einem Ausführungsbeispiel näher erläutert. Es zeigen:
- Fig. 1: in vereinfachter perspektivischer Darstellung eine Maschine bzw. Vorrichtung umlaufender Bauart zum Herstellen von gefüllten Behältern;
- Fig. 2: in schematischer Darstellung einen Vertikalschnitt durch die Vorrichtung der Figur 1;
- Fig. 3: eine vergrößerte Teildarstellung der Figur 2;
- Fig. 4: in schematischer Darstellung eine Draufsicht auf die Vorrichtung der Figuren 1 - 3;
- Fig. 5: in vereinfachter schematischer Teildarstellung eines der Form- und Füllelemente der Vorrichtung der Figur 1 - 4.

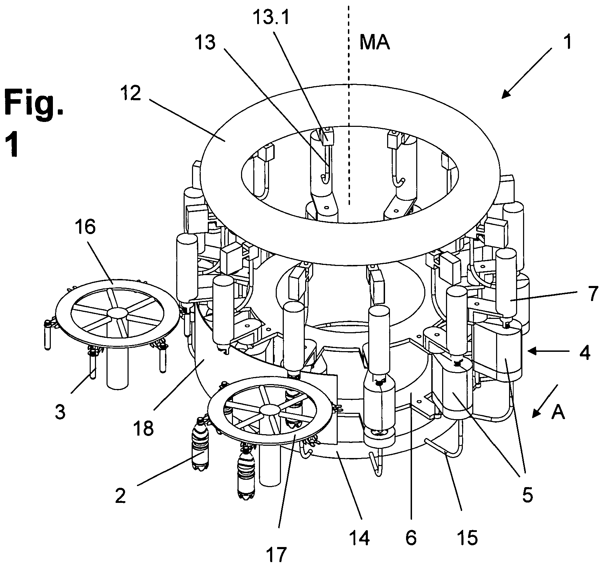

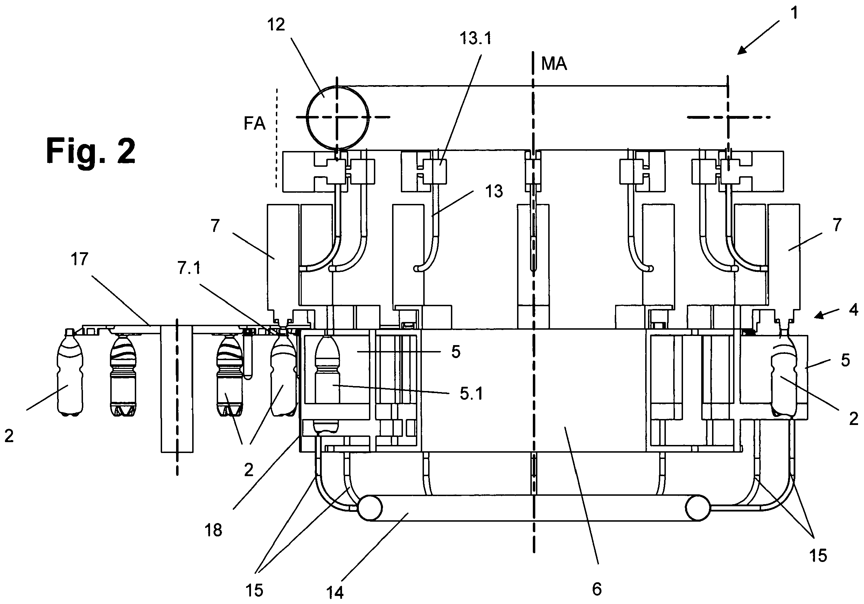

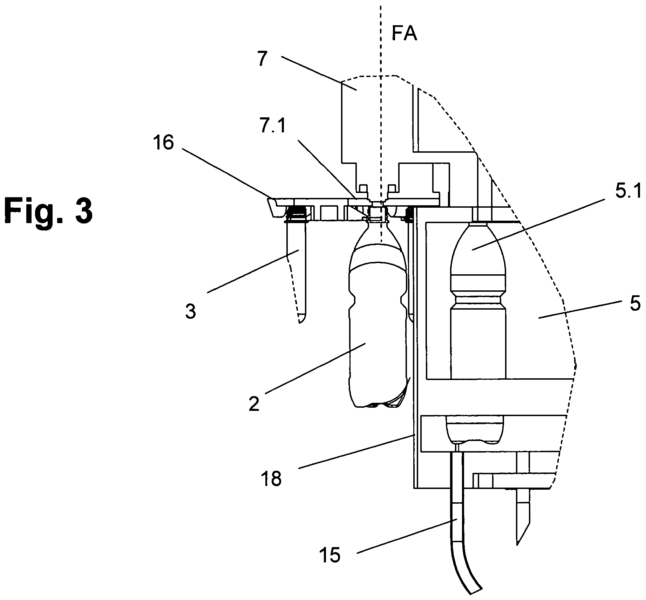

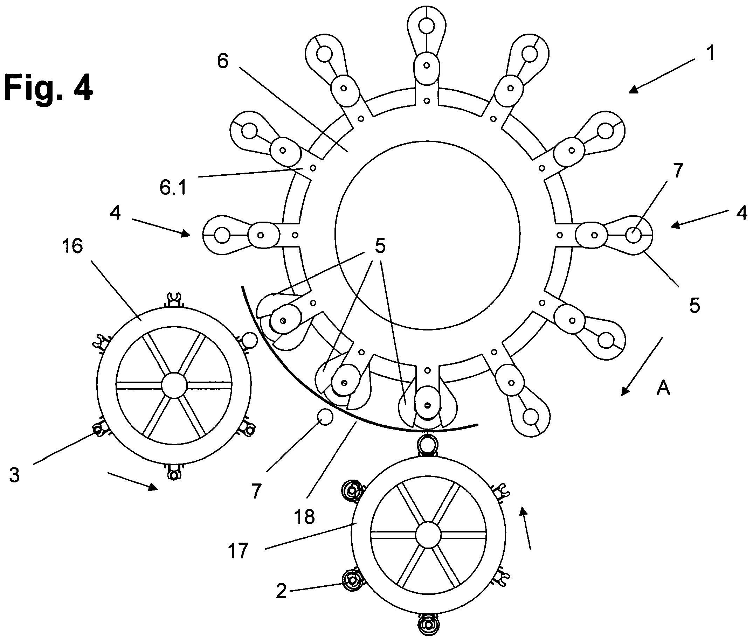

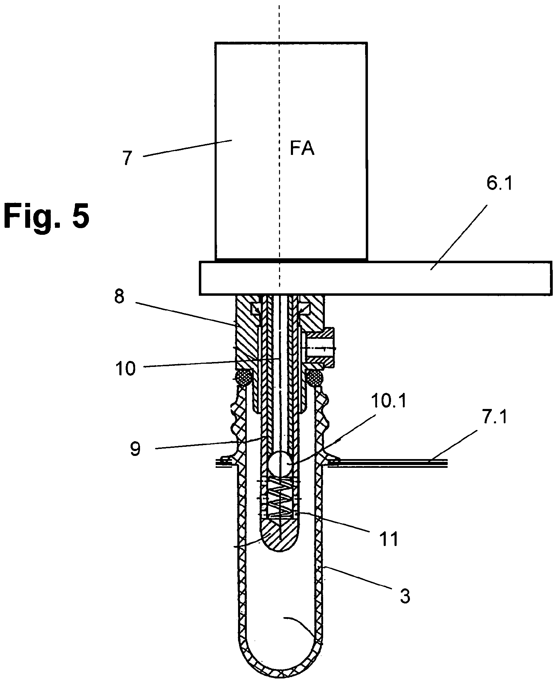

Die in den Figuren 1 - 4 allgemein mit 1 bezeichnete Vorrichtung dient zum Herstellen von gefüllten Behältern 2 in Form von Flaschen unter Verwendung von Vorformlingen 3 (Preforms) aus einem thermoplastischen Material, beispielsweise aus Polyethylenterephthalat (PET), Polyethylen (PEE), Polyethylennaphthalat (PEN) oder Polypropylen (PP). Die Vorformlinge 3 sind in bekannter Weise hülsenartig mit einem offenen, die spätere Behältermündung bildenden Ende und mit einem geschlossenen, den späteren Behälterboden bildenden Boden sowie mit einem den späteren Mündungsflansch der Behälter 2 bildenden Flansch ausgebildet (hierzu auch Figur 5).

Die Herstellung der mit dem flüssigen Füllgut gefüllten Behälter 2 erfolgt grundsätzlich in der Weise, dass der jeweils konditionierte, d.h. zumindest vorerhitzte und in einer Form- und Füllstelle 4 bzw. im Innenraum 5.1 einer dortigen geschlossenen Form 5 angeordnete Vorformling 3 mit dem unter hohen Form- und Fülldruck stehenden und beispielsweise für ein heißsteriles Abfüllen erhitzten Füllgut beaufschlagt wird, sodass der Vorformling 3 in einem Form- und Füllprozess durch dieses Füllgut hydraulisch in den jeweiligen Behälter 2 verformt und hierbei der Behälter 2 zugleich gefüllt wird. Jeder so geformte und gefüllte Behälter 2 wird dann nach seiner Entlastung von dem Form- und Fülldruck auf Umgebungsdruck und nach der Entnahme aus der Form 5 in geeigneter Weise verschlossen.

Zur Durchführung des Form- und Füllprozesses weist die Vorrichtung 1 an einem umlaufend antreibbaren Transportelement in Form eines um eine vertikale Maschinenachse MA umlaufend antreibbaren Rotors 6 (Pfeil A) eine Vielzahl von Form- und Füllstellen 4 auf, die im gleichen radialen Abstand von der Maschinenachse MA und in gleichmäßigen Winkelabständen um diese Achse gegeneinander versetzt vorgesehen sind. Jede Form- und Füllstelle 4 umfasst zusätzlich zu ihrer Form 5 ein bei der dargestellten Ausführungsform über dieser Form angeordnetes Form- und Füllelement 7 auf, welches zumindest während des jeweiligen Form- und Füllprozesses mit einem Füllelementabschnitt oder Form- und Füllkopf 8 in die geschlossene Form 5 hineinreicht und gegen welches der jeweilige Vorformling 3 bzw. der sich formende Behälter 2 an dem Mündungsflansch durch Haltemittel 7.1 gehalten mit seinem offenen Ende in Dichtlage angepresst anliegt.

Im Form- und Füllkopf 8 ist in vertikaler Richtung, d.h. in Richtung einer Form- und Füllelementachse FA eine Reckstange 9 axial verschiebbar vorgesehen, die mit ihrem in der Figur 5 unteren abgerundeten Ende während des Form- und Füllprozess zumindest zeitweise zunächst gegen den Boden des betreffenden Vorformlings 3 und dann gegen den Boden des sich formenden Behälters 2 anliegend gesteuert nach unten bewegt wird und damit das Verformen bzw. Recken des Vorformlings 3 in den jeweiligen Behälter 2 in der Achse FA steuert. Bei der dargestellten Ausführungsform erfolgt auch das Einleiten des flüssigen Füllgutes in den Vorformling 3 bzw. in den sich zunehmend formenden Behälter 2 über einen, der in der Reckstange 9 ausgebildet ist und an Öffnungen 11 im Bereich des unteren Endes der Reckstange 9 mündet. Im Flüssigkeitskanal 10 ist den Öffnungen 11 vorausgehend ein Rückschlagventil 10.1 angeordnet, mit welchen ein Leerlaufen des Flüssigkeitskanals 10 nach Beendigung des Form- und Füllprozesses vermieden wird.

Am Rotor 6 ist ein Ringkessel 12 vorgesehen, der während des Form- und Füllbetriebes der Vorrichtung 1 mit dem unter dem Form- und Fülldruck stehenden Füllgut zumindest teilgefüllt ist und über Steuerventile 13.1 aufweisende Leitungen 13 mit den Form- und Füllelementen 7 verbunden ist. Unterhalb der Form- und Füllstellen 4 ist am Rotor 6 ein Ringkessel 14 vorgesehen, der u.a. als Sammelkessel oder -behälter zum Sammeln von Füllgutresten, die beispielsweise durch defekte Vorformlinge 3 und/oder durch ein Platzen von Behältern 2 während des Form- und Füllprozesses in die Form 5 gelangt sind, und von flüssigen Reinigungs- und Desinfektionsmitteln während der Reinigung und/oder Desinfektion der Form- und Füllstellen 4 bzw. der Formen 5 oder während eines Reinigungs- und Desinfektions-Betriebes der Vorrichtung 1 dient. Über vorzugsweise flexible Leitungen 15 sind die Formen 5 mit dem Ringkessel 14 verbunden.

Die Vorformlinge 3 werden den einzelnen Form- und Füllstellen 4 bei der dargestellten Ausführungsform über einen Transportstern 16 zugeführt. Die gefüllten Behälter 2 werden den nach dem Formen und Füllen wieder geöffneten Formen 5 über einen Transportstern 17 entnommen.

Wie ausgeführt, verbleibt nach dem jeweiligen Form- und Füllprozess zwangsläufig Füllgut an den Form- und Füllelementen 7, insbesondere in bzw. an deren Form- und Füllköpfen 8 und an der Reckstange 9. Weiterhin lässt sich grundsätzlich auch nicht vermeiden, dass beim Entlasten der gefüllten Behälter 2 Füllgut austritt. Diese Füllgutreste führen auch aufgrund von Luftbewegungen zu einer Innen- und Außenverschmutzung der Formen 5 mit Füllgut, und zwar mit der Gefahr einer Verkeimung von Füllgutresten an der Innen- und Außenseite der Formen 5 und einer mikrobiologischen Gefährdung des in die Behälter 2 abgefüllten Füllgutes und/oder auch von Personen, beispielsweise des Bedienungspersonals der Vorrichtung 1. Um dies zu vermeiden, sind die Form -und Füllstellen 4 der Vorrichtung 1 in der nachstehend näher beschriebenen Weise derart ausgebildet, dass der Betriebszustand jeder Form- und Füllstelle 4 gesteuert zwischen einem Form- und Füllzustand während des Form- und Füllprozesses und einem Schutzzustand veränderbar ist.

Für diese Änderung des Betriebszustandes ist die Form 5 jeder Form- und Füllstelle 4 relativ zu dem zugehörigen Form- und Füllelement 7 und dem zugehörigen Halter 7.1 beweglich, und zwar bei der dargestellten Ausführungsform radial zur Maschinenachse MA zwischen einer bezogen auf diese Achse radial außenliegenden Form- und Füllposition, die dem Form- und Füllzustand entspricht und in der das jeweilige Form- und Füllelement 7 zumindest mit seinem Füll- und Formkopf 8 in den Innenraum 5.1 der zugehörigen Form 5 hineinreicht, und einer bezogen auf die Maschinenachse MA radial weiter innen liegenden Parkposition, die dem Schutzzustand entspricht und in der die Form 5 gegenüber dem zugehörigen Form- und Füllelement 7 bzw. der vertikalen Achse FA dieses Elementes und gegenüber dem Halter 7.1 soweit radial nach innen bewegt ist, dass sich zumindest diejenigen kritischen Bereiche des Form- und Füllelementes 7 und des Halters 7.1, die während des Form- und Füllprozesses mit dem in die Vorformlinge 3 bzw. in die sich formenden Behälter 2 eingebrachten Füllgut in Berührung kommen und/oder an denen nach dem Abnehmen der gefüllten Behälter 2 Füllgutreste verbleiben, sich deutlich außerhalb des Innenraumes 5.1 der zugehörigen Form 5 befinden. Diese kritischen Bereiche sind insbesondere auch der die jeweilige Abgabeöffnung für das Füllgut bildende Bereich des Füll- und Formkopfes 8, d.h. bei der dargestellten Ausführungsform die Öffnungen 11, und die Reckstange 9. Im Gegensatz zu den Formen 5 sind die Form- und Füllelemente 7 und deren Träger 7.1 fest an dem Rotor 6 bzw. an jeweils einem Rotorabschnitt oder Ausleger 6.1 vorgesehen.

Die Bewegung der Formen 5 zwischen ihrer Form- und Füllposition und der Parkposition ist in Abhängigkeit von der Drehbewegung bzw. Drehstellung des Rotors 6 gesteuert, beispielsweise durch entsprechende, nicht dargstellte Steuerkurven, und zwar in der Weise, dass jeder Vorformling 3 über den Transportstern 16 an eine in der Parkposition befindliche Form- und Füllstelle 4 übergeben und dann mit dem zugehörigen Halter 7.1 in Dichtlage gegen den Füll- und Formkopf angepresst wird. Erst im Anschluss daran wird die zugehörige offene Form 5 in die Form- und Füllposition bewegt und hierbei der Vorformling 3 in diese Form eingebracht, sodass dann auf dem anschließenden Winkelbereich der Drehbewegung des Rotors 6 bei geschlossener Form 5 das Formen und Füllen des jeweiligen Behälters 2 erfolgen kann. Kurz bevor die jeweilige Form- und Füllstelle 4 aufgrund der Drehbewegung des Rotors 6 den vom Transportstern 17 gebildeten Behälterauslauf erreicht, wird die jeweilige Form 5 geöffnet und aus ihrer Form- und Füllposition zurück in die Parkposition bewegt. Der gefüllte Behälter verbleibt zunächst weiterhin in Dichtlage an dem Form- und Füllelement 7. Erst bei Erreichen des Behälterauslaufs wird der gefüllte Behälter 2 von dem Form- und Füllelement 7 und dem Träger 7.1 abgenommen und über den Transportstern 17 wegtransportiert. An dem jeweiligen Form- und Füllelement 7 eventuell anhaftende Füllgutreste können auf den Winkelbereich der Drehbewegung des Rotors 6 zwischen dem vom Transportstern 17 gebildeten Behälterauslauf und der von dem Transportstern 16 gebildeten Vorformling-Übergabe abtropfen, und zwar bis erneut ein Vorformling 3 an dem Form- und Füllelement 7 positioniert ist. Auf jeden Fall besteht zu keinem Zeitpunkt des Form- und Füllbetriebes der Vorrichtung 1 eine Situation, in der durch Vorformlinge 3 oder durch Behälter 2 nicht besetzte Form- und Füllelemente 7 sich innerhalb der Form 5 der zugehörigen Form- und Füllstelle 4 befinden bzw. in diese hineinreichen und es daher nach dem Abnehmen des jeweils gefüllten Behälters durch das Füllgut zu einer Verunreinigung des Form- oder Innenraumes 5.1 der Formen 5 kommen könnte.

Um eine Kontaminierung der geöffneten Formen 5 durch Füllgut auf dem Winkelbereich der Drehbewegung des Rotors 6 zwischen dem Behälterauslauf und der Vorformling-Übergabe zu vermeiden, ist auf diesem Winkelbereich der Drehbewegung des Rotors 6 eine Schutzeinrichtung in Form eines Trennbleches oder einer Wand 18 vorgesehen. Die Wand 18 ist um die Maschinenachse MA kreisbogenförmig gekrümmt so angeordnet, dass die Bewegungsbahn der in der Parkposition befindlichen Formen 5 an der der Maschinenachse MA zugewandten konkaven Seite der Wand 18 und die Bewegungsbahn der Form- und Füllelemente 7 und der Halter 7.1 an der der Maschinenachse MA abgewandten konvexen Seite der Wand 18 verlaufen. Anstelle von oder zusätzlich zu der Wand 18 kann als Schutz auch ein von einer Strömung eines gas- und/oder dampfförmigen Mediums gebildeter "Vorhang" vorgesehen sein.

Die Erfindung wurde voranstehend an einem Ausführungsbeispiel beschrieben. Es versteht sich, dass Änderungen sowie Abwandlungen möglich sind, ohne dass dadurch der der Erfindung zugrundeliegende Erfindungsgedanke verlassen wird. So wurde vorstehend davon ausgegangen, dass die Formen 5 relativ zu ihren zugehörigen Form- und Füllelementen 7 zwischen der Form- und Füllposition und der Parkposition bewegt werden. Obwohl diese Ausführung aus konstruktiven Gesichtspunkten eine besonders zweckmäßige und günstige Lösung darstellt, ist es auch möglich, zur Erreichung der vorgenannten Vorteile die Formen 5 fest am Rotor 6 oder an einem anderen, umlaufenden Transportelement vorzusehen und die Form- und Füllelemente 7 zusammen mit ihren Haltern 7.1 zwischen einer Form- und Füllposition und einer Parkposition zu bewegen.

Weiterhin wurde vorstehend davon ausgegangen, dass die Bewegung zwischen der Form -und Füllposition und der Parkposition radial zur Maschinenachse MA erfolgt. Auch Bewegungen in anderen Richtungen oder in anderer Art, beispielsweise Schwenkbewegungen sind möglich.

### Bezugszeichenliste

- 1, 1a: Vorrichtung
- 2: Behälter
- 3: Vorformling
- 4: Form- und Füllstelle
- 5: Form
- 5.1: Innenraum
- 6: Rotor
- 6.1 - 6.3: Rotorabschnitt
- 7: Form- und Füllelement
- 7.1: Halter
- 8: Form- und Füllkopf
- 9: Reckstange
- 10: Flüssigkeitskanal
- 10.1: Rückschlagventil
- 11: Öffnung
- 12: Ringkessel
- 13: Leitung
- 13.1: Steuerventil
- 14: Ringkessel
- 15: Leitung
- 16, 17: Transportstern
- 18: Schutzeinrichtung oder-wand
- A: Drehrichtung Rotor 6
- FA: vertikale Achse des Form- und Füllelementes 7
- MA: vertikale Maschinenachse

## Patentansprüche

1. Verfahren zum Herstellen von gefüllten Behältern (2) aus Vorformlingen (3) aus einem thermoplastischen Material mittels einer Vorrichtung mit umlaufenden Rotor, wobei die Vorformlinge (3) jeweils an ein Form- und Füllelement (7) einer Form- und Füllstelle (4) übergeben und in einem anschließenden Form- und Füllprozess in einer Form (5) der in einem Form- und Füllzustand befindlichen Form- und Füllstelle (4) durch Druckeinwirkung eines zugeführten flüssigen Füllgutes in den jeweiligen Behälter (2) umgeformt werden, und wobei der Behälter (2) nach dem Formen und Füllen von dem Form- und Füllelement (7) der Form- und Füllstelle (4) abgenommen wird, **dadurch gekennzeichnet, dass** die Form- und Füllstelle (4) vor dem Abnehmen des geformten und gefüllten Behälters (2) in einen Schutzzustand überführt wird, in dem der Innenraum der jeweiligen Form (5) von dem während des Formens und Füllens mit dem Füllgut und mit den Vorformlingen (3) oder den sich formenden Behältern (2) in Berührung kommenden Bereichen des Form- und Füllelementes (7) getrennt und geschützt ist, wobei das Überführen der Form- und Füllstelle (4) zwischen dem Form- und Füllzustand und dem Schutzzustand durch Relativbewegung zwischen dem Form- und Füllelement (7) und der zugehörigen Form (5) erfolgt, beispielsweise durch eine lineare Bewegung in wenigstens einer Achsrichtung und/oder durch eine Schwenkbewegung, bis das Form- und Füllelement (7) außerhalb der Form (5) angeordnet ist, wobei bei einer Vielzahl von Form- und Füllstellen (4) an dem um eine vertikale Maschinenachse (MA) umlaufend antreibbaren Rotor (6), das Überführen der Form- und Füllstellen (4) zwischen ihrem Form- und Füllzustand und ihrem Schutzzustand durch eine Relativbewegung zwischen dem jeweiligen Form- und Füllelement (7) und der zugehörigen Form (5) quer zur Bewegungsrichtung des umlaufenden Rotors (6) erfolgt.

2. Verfahren nach Anspruch 1, **dadurch gekennzeichnet, dass** im Schutzzustand der Form- und Füllstelle (4) dessen Form- und Füllelement (7) oder zumindest solche Bereiche dieses Form- und Füllelementes (7), die während des Formens und Füllens mit dem Füllgut und mit den Vorformlingen (3) oder den sich formenden Behältern (2) in Berührung kommen, vom Innenraum der zugehörigen Form (5) beabstandet wird.

3. Verfahren nach Anspruch 1 oder 2, **dadurch gekennzeichnet, dass** nach Abschluss des jeweiligen Form- und Füllprozesses der Schutzzustand der Form- und Füllstelle (4) solange aufrecht erhalten wird, bis an die Form- und Füllstelle (4) oder an deren Form- und Füllelement (7) erneut ein Vorformling übergeben wurde.

4. Verfahren nach einem der vorhergehenden Ansprüche, **dadurch gekennzeichnet, dass** das Umschalten der Form- und Füllstellen (4) von dem Form- und Füllzustand in den Schutzzustand jeweils vor Erreichen eines Behälterauslaufs (17) erfolgt, an dem die gefüllten Behälter (2) den Form- und Füllstellen (4) entnommen werden, und dass das Rückführen der Form- und Füllstellen (4) in ihren Form- und Füllzustand nach dem Passieren eines Einlaufs (16) erfolgt, an welchem die Vorformlinge (3) an die Form- und Füllstellen (4) übergeben wurden.

5. Verfahren nach einem der vorhergehenden Ansprüche, **dadurch gekennzeichnet, dass** der jeweilige Vorformling (3) oder der sich aus diesem formende Behälter (2) zumindest zeitweise durch eine Reckstange (9) geführt und/oder in einer Achsrichtung, vorzugsweise in einer der Achse der Behälter (2) entsprechenden Achsrichtung (FA) gestreckt werden.

6. Vorrichtung zum Herstellen von mit einem flüssigen Füllgut gefüllten Behältern (2) aus Vorformlingen (3) aus einem thermoplastischen Material, mit mehreren Form- und Füllstellen (4) an einem um eine vertikale Maschinenachse (MA) umlaufend antreibbaren Rotor (6), wobei jede Form- und Füllstelle (4) wenigstens ein Form- und Füllelement (7), über welches während des Formens und Füllens das Füllgut in den jeweiligen Vorformling und in den sich formenden Behälter eingebracht wird, sowie wenigstens eine Form (5) mit einem in seiner Kontur der Formgebung der Behälter (2) entsprechenden Forminnenraum (5.1) aufweist, **dadurch gekennzeichnet, dass** das Form- und Füllelement (7) und die Form (5) für eine Zustandsänderung der Form- und Füllstelle (4) zwischen einem Form- und Füllzustand und einem Schutzzustand durch Relativbewegung bewegbar ist, in dem sich das Form- und Füllelement (7) außerhalb der Form (5) befindet, wobei die Relativbewegung zumindest eine Bewegungskomponente quer zur Bewegungsrichtung des umlaufenden Rotors (6) in einer Achsrichtung aufweist, beispielsweise in einer Achsrichtung radial zu einer Maschinenachse (MA), und/oder eine Schwenkbewegung um wenigstens eine Achse ist.

7. Vorrichtung nach Anspruch 6, **dadurch gekennzeichnet, dass** die Form (5) der jeweiligen Form- und Füllstelle (4) und/oder das Form- und Füllelement (7) radial zu einer Maschinenachse (MA) zwischen einer dem Form- und Füllzustand entsprechenden Form- und Füllposition und einer dem Schutzzustand entsprechenden Parkposition bewegbar sind.

8. Vorrichtung nach Anspruch 6 oder 7, **dadurch gekennzeichnet, dass** zwischen einer der Parkposition der Formen (5) oder der Form- und Füllelemente (7) entsprechenden Bewegungsbahn und einer der Form- und Füllposition der Form- und Füllelemente (7) oder der Formen (5) entsprechenden Bewegungsbahn in Transportrichtung (A) des Transportelementes zwischen dem Behälterauslauf (17) und dem Einlauf (16) für die Vorformlinge (3) eine Schutzeinrichtung, beispielsweise in Form einer Schutzwand (18) und/oder in Form eines Vorhangs aus einer Strömung eines gas- und/oder dampfförmigen Mediums vorgesehen ist.

9. Vorrichtung nach einem der vorhergehenden Ansprüche 6 bis 8, **gekennzeichnet durch** Mittel zum Reinigen und/oder Sterilisieren der jeweiligen Form (5), beispielsweise im Schutzzustand der wenigstens einen Form- und Füllstelle (4).

10. Vorrichtung nach Anspruch 9, **dadurch gekennzeichnet, dass** die Mittel zum Reinigen und/oder Sterilisieren für ein Ausbringen wenigstens eines flüssigen Reinigungs- und/oder Desinfektionsmittels und/oder eines dampf- und/oder gasförmigen Mediums auf Innen- oder Außenflächen der wenigstens einen Form- und Füllstelle (4) und/oder deren Form (5) ausgebildet sind.

11. Vorrichtung nach einem der vorhergehenden Ansprüche 6 bis 10, **dadurch gekennzeichnet, dass** die wenigstens eine Form (5) mehrteilig, vorzugsweise mit wenigstens zwei die Mantelfläche der Behälter (2) formenden Formteilen und mit wenigstens einem den Behälterboden formenden Formteil ausgebildet ist, vorzugsweise mit wenigstens zwei zangenartig und gelenkig miteinander verbundenen, die Mantelfläche der Behälter formenden Formteilen.

## Claims

1. Method for producing filled containers (2) from preforms (3) made of a thermoplastic material by means of a device comprising a rotating rotor, wherein
the preforms (3) are respectively transferred to a moulding and filling element (7) of a moulding and filling station (4) and formed into the respective container (2) in a mould (5) of the moulding and filling station (4), which is in a moulding and filling state, using pressure from a supplied liquid filling material during a subsequent moulding and filling process, and wherein
the container (2) is detached from the moulding and filling element (7) of the moulding and filling station (4) after the moulding and filling,
**characterised in that**
- before the moulded and filled container (2) is detached, the moulding and filling station (4) is transferred into a state of protection, in which the interior space of the respective mould (5) is separated and protected from the regions of the moulding and filling element (7) which come into contact with the filling material and with the preforms (3) or the containers (2) being moulded during the moulding and filling, wherein the moulding and filling station (4) is transferred between the moulding and filling state and the state of protection by relative movement between the moulding and filling element (7) and the corresponding mould (5), for example by a linear movement in at least one axial direction and/or by a swivel movement, until the moulding and filling element (7) is arranged outside the mould (5), wherein at a variety of moulding and filling stations (4), the moulding and filling stations (4) are transferred between their moulding and filling state and their state of protection by a relative movement between the respective moulding and filling element (7) and the corresponding mould (5) transversely to the movement direction of the rotating rotor (6) at the rotor (6), which can be driven rotating about a vertical machine axis (MA).

2. Method according to claim 1, **characterised in that** in the state of protection of the moulding and filling station (4), its moulding and filling element (7) or at least such regions of this moulding and filling element (7), which come into contact with the filling material and with the preforms (3) or the containers (2) being moulded during the moulding and filling, are spaced from the interior space of the corresponding mould (5).

3. Method according to claim 1 or 2, **characterised in that** after the respective moulding and filling process is complete, the state of protection of the moulding and filling station (4) is maintained until a preform has again been transferred to the moulding and filling station (4) or to its moulding and filling element (7).

4. Method according to one of the previous claims, **characterised in that** the moulding and filling stations (4) respectively switch from the moulding and filling state to the state of protection before reaching a container outlet (17), at which the filled containers (2) are removed from the moulding and filling stations (4), and that the moulding and filling stations (4) are returned to their moulding and filling state after passing an inlet (16), at which the preforms (3) were transferred to the moulding and filling stations (4).

5. Method according to one of the previous claims, **characterised in that** the respective preform (3) or the container (2) being moulded from it are at least temporarily guided through a horizontal bar (9) and/or stretched in an axial direction, preferably in an axial direction (FA) corresponding to the axis of the containers (2).

6. Device for producing containers (2) filled with a liquid filling material from preforms (3) made of a thermoplastic material comprising multiple moulding and filling stations (4) on a rotor (6) which can be driven rotating about a vertical machine axis (MA), wherein each moulding and filling station (4) includes at least one moulding and filling element (7), through which the filling material is introduced into the respective preform and into the container being moulded during the moulding and filling, as well as at least one mould (5) comprising a mould interior (5.1) whose shape corresponds to the shaping of the container (2), **characterised in that** the moulding and filling element (7) and the mould (5) can be moved by a relative movement to change the state of the moulding and filling station (4) between a moulding and filling state and a state of protection, in which the moulding and filling element (7) is located outside the mould (5), wherein the relative movement includes at least one movement component transversely to the movement direction of the rotating rotor (6) in an axial direction, for example in an axial direction radial to a machine axis (MA), and/or is a swivel movement about at least one axis.

7. Device according to claim 6, **characterised in that** the mould (5) of the respective moulding and filling station (4) and/or the moulding and filling element (7) can be moved radially to a machine axis (MA) between a moulding and filling position corresponding to the moulding and filling state and a parking position corresponding to the state of protection.

8. Device according to claim 6 or 7, **characterised in that** a protective device for the preforms (3), for example in the form of a protective wall (18) and/or in the form of a curtain from a stream of a gaseous and/or vaporous medium, is provided between a path of motion corresponding to the parking position of the moulds (5) or the moulding and filling elements (7) and a path of motion corresponding to the moulding and filling position of the moulding and filling elements (7) or the moulds (5) in the transport direction (A) of the transport element between the container outlet (17) and the inlet (16).

9. Device according to one of the previous claims 6 to 8, **characterised by** means for cleaning and/or sterilising the respective mould (5), for example in the state of protection of the at least one moulding and filling station (4).

10. Device according to claim 9, **characterised in that** the means for cleaning and/or sterilising are configured for a distribution of at least one liquid cleaning and/or disinfecting agent and/or a vaporous and/or gaseous medium on inner or outer surfaces of the at least one moulding and filling station (4) and/or its mould (5).

11. Device according to one of the previous claims 6 to 10, **characterised in that** the at least one mould (5) is of a multipart design, preferably comprising at least two moulded parts forming the lateral surface of the containers (2) and comprising at least one moulded part forming the container base, preferably comprising at least two moulded parts interconnected like pliers and hingedly forming the lateral surface of the containers.

## Revendications

1. Procédé de fabrication au moyen d'un dispositif avec un rotor en rotation de récipients (2) remplis à partir de préformes (3) en un matériau thermoplastique, chacune des préformes (3) étant respectivement remise à un élément de moulage et de remplissage (7) d'un poste de moulage et de remplissage (4) puis, au cours d'un processus de moulage et de remplissage suivant dans un moule (5) du poste de moulage et de remplissage (4) en état opérationnel de moulage et de remplissage, transformée en récipient (2) respectif sous l'effet de la pression exercée par un produit de remplissage liquide qui y est amené, le récipient (2) étant retiré de l'élément de moulage et de remplissage (7) du poste de moulage et de remplissage (4) après le moulage et le remplissage, **caractérisé en ce que** le poste de moulage et de remplissage (4) passe, avant le retrait du récipient (2) moulé et rempli, en un mode de protection dans lequel l'espace intérieur du moule (5) respectif est protégé et séparé des parties de l'élément de moulage et de remplissage (7) entrant en contact avec le produit de remplissage et avec les préformes (3) ou les récipients (2) en cours de formation pendant le moulage et le remplissage, le passage du poste de moulage et de remplissage (4) entre le mode de moulage et de remplissage et le mode de protection s'effectuant par un mouvement relatif entre l'élément de moulage et de remplissage (7) et le moule (5) correspondant, par exemple par un mouvement linéaires selon au moins un sens axial et/ou par un mouvement de pivotement jusqu'à ce que l'élément de moulage et de remplissage (7) soit placé en-dehors du moule (5) et, dans le cas d'une pluralité de postes de moulage et de remplissage (4) équipant le rotor (6) entraîné en un mouvement de rotation autour d'un axe vertical de la machine (MA), le passage des postes de moulage et de remplissage (4) entre leur mode de moulage et de remplissage et leur mode de protection s'effectuant par un mouvement relatif, transversal par rapport au sens de rotation du rotor (6), entre l'élément de moulage et de remplissage (7) respectif et le moule (5) correspondant.

2. Procédé selon la revendication 1, **caractérisé en ce que,** en mode de protection du poste de moulage et de remplissage (4), son élément de moulage et de remplissage (7) ou au moins de telles parties de cet élément de moulage et de remplissage (7) qui, pendant le moulage et le remplissage, entrent en contact avec le produit de remplissage et avec les préformes (3) ou les récipients (2) en cours de formation est (sont) écarté(es) de l'espace intérieur du moule (5) correspondant.

3. Procédé selon la revendication 1 ou 2, **caractérisé en ce que,** après achèvement de chaque processus moulage et de remplissage, le poste de moulage et de remplissage (4) est maintenu en mode de protection jusqu'à ce qu'une nouvelle préforme soit remise au poste de moulage et de remplissage (4) ou à son élément de moulage et de remplissage (7).

4. Procédé selon l'une des revendications précédentes, **caractérisé en ce que** le passage des postes de moulage et de remplissage (4) du mode de moulage et de remplissage au mode de protection a respectivement lieu avant d'atteindre une sortie (17) de récipients à laquelle les récipients (2) remplis sont extraits des postes de moulage et de remplissage (4), et **en ce que** les postes de moulage et de remplissage (4) sont replacés en leur mode de moulage et de remplissage après avoir passé une entrée (16) à laquelle les préformes (3) sont remises aux postes de moulage et de remplissage (4).

5. Procédé selon l'une des revendications précédentes, **caractérisé en ce que** chaque préforme (3) ou le récipient (2) en cours de formation à partir de celle-ci est, temporairement au moins, guidé par une barre d'étirage (9) et/ou étiré en sens axial (RA) de préférence en un sens axial (FA) correspondant à l'un des axes des récipients (2).

6. Dispositif de production de récipients (2) remplis d'un produit liquide à partir de préformes (3) en un matériau thermoplastique, avec plusieurs postes de moulage et de remplissage (4) sur un rotor (6) pouvant être entraîné en un mouvement de rotation autour d'un axe vertical (MA) de la machine, chaque poste de moulage et de remplissage (4) présentant au moins un élément de moulage et de remplissage (7) par lequel le produit de remplissage est introduit, pendant le moulage et le remplissage, dans la préforme respective et dans le récipient en cours de formation, et au moins un moule (5) dont l'espace intérieur (5.1) présente un contour correspondant à la forme à donner au récipient (2), **caractérisé en ce que** l'élément de moulage et de remplissage (7) et le moule (5) peuvent effectuer un mouvement relatif pour un changement d'état du poste de moulage et de remplissage (4) entre un mode de moulage et de remplissage et un mode de protection dans lequel l'élément de moulage et de remplissage (7) se trouve à l'extérieur du moule (5), ce mouvement relatif présentant au moins une composante axiale transversale par rapport au sens de rotation du rotor (6), par exemple selon une direction axiale radiale par rapport à un axe de la machine (MA), et/ou étant un mouvement de pivotement autour d'au moins un axe.

7. Dispositif selon la revendication 6, **caractérisé en ce que** le moule (5) de chaque poste de moulage et de remplissage (4) et/ou l'élément de moulage et de remplissage (7) peuvent être déplacés en sens radial par rapport à un axe de la machine (MA) entre une position de moulage et de remplissage correspondant au mode de moulage et de remplissage et une position de repos correspondant au mode de protection.

8. Dispositif selon la revendication 6 ou 7, **caractérisé en ce que,** entre un parcours correspondant à la position de repos des moules (5) ou des éléments de moulage et de remplissage (7) et un parcours correspondant à la position de moulage et de remplissage des éléments de moulage et de remplissage (7) ou des moules (5), est prévu un dispositif protecteur entre la sortie (17) des récipients et l'entrée (16) des préformes (3) dans la direction de transport (A) de l'élément de transport, par exemple sous forme d'une paroi de protection (18) et/ou sous forme d'un écran formé par un courant d'un produit gazeux ou sous forme de vapeur.

9. Dispositif selon l'une des revendications précédentes 6 à 8, **caractérisé par** des moyens de nettoyage et/ou de stérilisation de chacun des moules (5), par exemple lorsque le(s) poste(s) de moulage et de remplissage (4) se trouve(nt) en mode de protection.

10. Dispositif selon la revendication 9, **caractérisé en ce que** les moyens de nettoyage et/ou de stérilisation sont conçus pour l'application d'au moins un produit de nettoyage et/ou de désinfection liquide et/ou d'un produit gazeux ou sous forme de vapeur sur des surfaces intérieures et extérieures du (des) poste(s) de moulage et de remplissage (4) et/ou du moule (5) correspondant.

11. Dispositif selon l'une des revendications précédentes 6 à 10, **caractérisé en ce que** le(s) moule(s) (5) est (sont) formé(s) de plusieurs parties, de préférence avec au moins deux parties de moule formant la surface externe des récipients (2) et au moins une partie formant le fond des récipients, de préférence avec au moins deux parties de moule reliées sous forme de pince par une articulation et formant la surface externe des récipients.
